# DEMANDE DE BREVET EUROPEEN

(11) **EP 0 867 629 A1**
(43) Date de publication de la demande: **30.09.1998**
(21) Numéro de dépôt: 98105449.7
(22) Date de dépôt: 25.03.1998
(51) Int. Cl.: F16D 27/00

(54) **Embrayage à friction à actionneur à moyens moteurs, notamment pour véhicule automobile**

(30) Priorité: 25.03.1997 FR 9703627; 25.09.1997 PC /FR97/01680 T
(71) Demandeur: VALEO, 75017 Paris (FR)
(72) Inventeur: Lemoine, Benoît, 93400 Saint Ouen (FR); Lebas, Gilles, 92600 Asnieres (FR); Boclet, Jacques, 93190 Livry Gargan (FR); Graton, Michel, 75020 Paris (FR); Randriazanamparany, Vévé Roland, 92500 Rueil-Malmaison (FR); Tobiasz, André, 93800 Epinay Sur Seine (FR)
(74) Mandataire: Gamonal, Didier

(57) **Abrégé**

L'embrayage à friction comporte, d'une part, un dispositif d'embrayage comprenant un diaphragme (3) et, d'autre part, une timonerie (80), un actionneur (50,60,70,90,91) pour commander ladite timonerie, et un dispositif de réglage (10), dit rattrapeur d'usure, pour compenser l'usure des garnitures de friction (7). L'actionneur comporte des moyens de manoeuvre à moyens moteurs (50), une transmission mécanique (60) avec un élément d'entrée (51) et un ressort à boudin d'assistance (70) prenant appui sur une partie fixe (91,66) et sur une partie mobile (61) formant un écrou pour coopérer avec l'arbre de sortie (51) du moteur électrique. La partie mobile (61) forme l'élément de sortie de la transmission mécanique (60) en étant propre à agir sur la timonerie (80). Le dispositif de rattrapage d'usure (10) est monté au sein du dispositif de débrayage.

## Description

La présente invention concerne les embrayages à friction, notamment pour véhicules automobiles comportant, d'une part, un dispositif d'embrayage comprenant des moyens embrayeurs prenant appui sur un couvercle, solidaire d'un volant d'entraînement en rotation, pour action sur un plateau de pression et serrage des garnitures de friction d'un disque de friction entre le plateau de pression et le volant d'entraînement et, d'autre part, une timonerie pour agir de manière antagoniste sur l'extrémité interne des moyens embrayeurs, un actionneur pour commander ladite timonerie, et un dispositif de réglage, dit rattrapeur d'usure, pour compenser l'usure des garnitures de friction, dans lequel l'actionneur comporte des moyens de manoeuvre à moyens moteurs, une transmission mécanique avec un élément d'entrée formé par l'arbre de sortie des moyens moteurs, un élément de sortie pour agir sur la timonerie, des moyens élastiques d'assistance agissant entre une partie fixe et un élément de la transmission pour agir de manière antagoniste par rapport aux moyens embrayeurs afin que les moyens moteurs ne fournissent qu'un faible effort pour désengager l'embrayage.

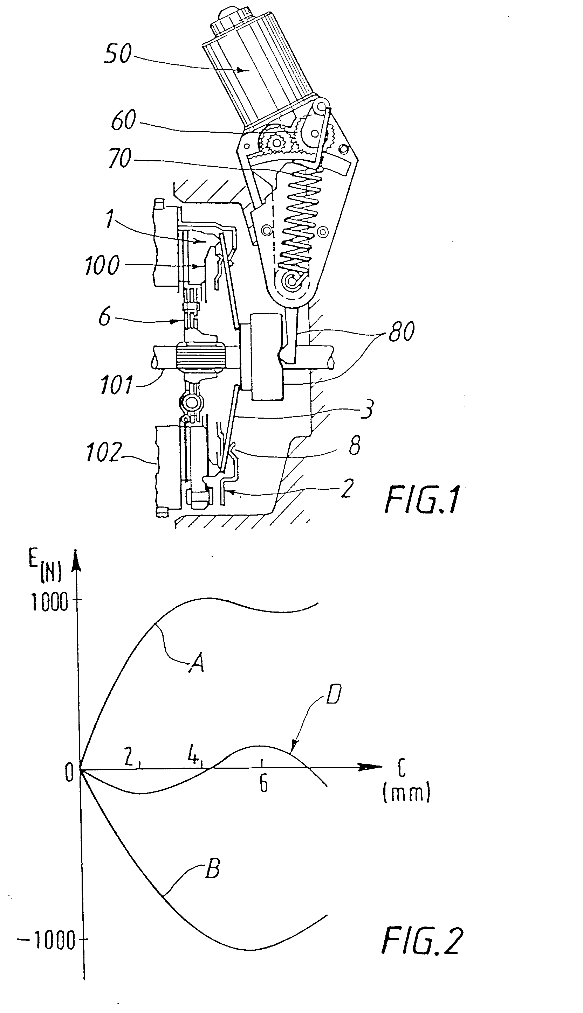

Par exemple (figure 1) l'actionneur comporte un moteur électrique 50 agissant sur une transmission mécanique 60 comportant des pignons et un secteur denté sur lequel est accroché un ressort à boudin 70 constituant les moyens élastiques d'assistance.

La timonerie 80 comporte une fourchette reliée au secteur denté et une butée de débrayage agissant sur l'extrémité interne des doigts du diaphragme, formant les moyens embrayeurs, montés de manière pivotante sur le fond du couvercle 2 à l'aide de moyens d'assemblage 8 comportant un appui primaire formé par emboutissage dans le fond du diaphragme et une couronne jonc formant un appui secondaire en regard de l'appui primaire.

La couronne jonc, de manière connue, est portée par des pattes issues par découpe et pliage du fond du couvercle, lesdites pattes traversant le diaphragme 3 comportant de manière connue une partie périphérique en forme de rondelle Belleville prolongée radialement vers l'intérieur par une partie centrale fragmentée en doigts radiaux par des fentes. La rondelle Belleville constitue les moyens embrayeurs de l'embrayage, tandis que les doigts radiaux forment des moyens débrayeurs de l 'embrayage.

La périphérie externe du diaphragme 3 s'appuie sur le plateau de pression 1 pour serrer les garnitures de friction du disque de friction 6 entre le plateau de pression 1 et le volant d'entraînement 102 solidaire de manière non visible d'un arbre menant, tandis que le disque de friction 6 présente centralement un moyeu cannelé coopérant avec les cannelures, que présente un arbre mené 101 traversant la butée de débrayage précitée. Ainsi ramené au niveau de la butée de débrayage, on obtient les courbes caractéristiques de la figure 2 dans laquelle l'abscisse c correspond à la course de la butée de débrayage en mm et l'ordonnée E à des efforts en Newton.

La courbe A correspond à la charge à la butée de débrayage, la courbe B à la charge antagoniste des moyens élastiques d'assistance et la courbe D à l'effort développé par le moteur électrique.

Les moyens élastiques d'assistance emmagasinent l'énergie du diaphragme 3 pendant l'opération d'engagement de l'embrayage et la restitue, usuellement plus vite, au moment de l'opération de débrayage.

Ainsi le moteur électrique ne fournit que la différence entre l'effort du diaphragme et l'effort des moyens élastiques d'assistance.

En outre il est prévu, comme décrit dans le document FR-A-2 564 921, un dispositif de rattrapage d'usure permettant de réduire la course des moyens élastiques d'assistance permettant ainsi une excellente tenue de ces moyens élastiques pouvant ainsi être implantés de manière commode dans l'actionneur.

Néanmoins il peut être souhaitable de réduire encore le coût de l'actionneur et de simplifier encore celui-ci tout en ayant une construction robuste et peu encombrante.

La présente invention a pour objet de répondre à ces souhaits.

Suivant l'invention un embrayage à friction du type sus-indiqué est caractérisé en ce que les moyens élastiques d'assistance consistent en un ressort à boudin prenant appui sur une partie fixe et sur une partie mobile en translation et fixe en rotation comportant un écrou pour coopérer avec l'arbre de sortie des moyens moteurs, formant vis, mobile en rotation et fixe en translation, en ce que le ressort d'assistance entoure l'écrou, en ce que la partie mobile forme l'élément de sortie de la transmission mécanique en étant propre à agir sur la timonerie et en ce que le dispositif de rattrapage d'usure est monté au sein du dispositif de débrayage.

Grâce à l'invention la timonerie et l'actionneur sont simplifiés puisque le dispositif de rattrapage d'usure est monté au sein du dispositif d'embrayage ce qui permet d'augmenter la durée de vie dudit embrayage, tout en ayant une position stable et globalement constante pour les moyens débrayeurs, tels qu'un diaphragme, lorsque l'embrayage est en position engagée.

L'actionneur est simplifié puisqu' il est dépourvu de secteur denté et de pignon. Il est en outre léger.

L'actionneur comporte des moyens moteurs d'une forme quelconque, par exemple du type hydraulique, ou d'une manière générale une machine tournante, telle qu'un moteur électrique avec ou sans balais.

Les moyens élastiques d'assistance, sous forme d'un simple ressort à boudin entourant l'écrou, permettent de réduire les coûts et de rendre peu encombrant et robuste l'actionneur.

L'actionneur est ainsi peu encombrant et robuste et d'un coût réduit, sa transmission mécanique étant simplifiée.

Dans une forme de réalisation l'actionneur comporte un boitier fixé sur un flasque formant couvercle et servant de support au moteur électrique ou d'une manière générale aux moyens moteurs, l'ensemble boîtier-flasque forme un carter monté sur une partie fixe.

L'arbre de sortie fileté des moyens moteurs pénètre dans ledit boîtier ainsi que la partie mobile, formant écrou, de la transmission mécanique. Cet écrou peut être lié en rotation à un manchon du boîtier et ceci avec possibilité de déplacement axial par exemple par une liaison du type tenons-mortaises. L'écrou porte un appui mobile pour le ressort à boudin, tandis que le flasque ou le boîtier porte un appui fixe pour ledit ressort.

L'actionneur est ainsi d'un coût très réduit tout en étant fiable, de forme simple, robuste et peu encombrant. Les risques de coincement sont réduits.

L'écrou agit, soit en tirant, soit en poussant sur la timonerie pouvant comporter de manière classique une fourchette de débrayage agissant sur la butée de débrayage. En variante cette timonerie comporte une commande hydraulique avec un récepteur dont le piston agit sur la butée de débrayage et un émetteur dont le piston est commandé par l'écrou de l'actionneur. Le récepteur est, dans ce cas, du type concentrique en étant traversé centralement par l'arbre mené. L'écrou peut agir sur un câble de la timonerie.

En variante le moteur électrique, constituant les moyens moteurs, peut être monté sur un flasque fixé au couvercle de l'embrayage comme décrit dans le document FR-A-2 580 753.

Dans tous les cas l'actionneur forme un ensemble manipulable et transportable facilement et d'implantation aisée du fait de sa faible taille.

Dans une autre forme de réalisation l'arbre de sortie du moteur électrique entraîne une roue phonique associée à un capteur à effet Hall pour mesurer le déplacement de la partie mobile. Il est même possible de monter l'électronique de puissance dans le boîtier.

En variante il peut s'agir d'un capteur incrémental avec des dents solidaires d'une roue entraînée par l'arbre de sortie des moyens moteurs et défilant devant un organe de lecture destiné à produire un signal de lecture représentatif de la position et/ou de la vitesse de la partie mobile.

Dans une forme de réalisation le ressort à boudin d'assistance entoure les moyens moteurs, tel qu'un moteur électrique. Cette disposition permet de réduire l'encombrement axial de l'actionneur.

La description qui va suivre illustre l'invention en regard des dessins annexés dans lesquels :
- la figure 1 est une vue en coupe axiale schématique d'un embrayage de l'art antérieur ;
- la figure 2 est une vue montrant les courbes caractéristiques de cet embrayage ;
- la figure 3 est une demi-vue en coupe axiale, sans l'actionneur, d'un embrayage équipé d'un dispositif de rattrapage d'usure selon l'invention ;
- la figure 4 est une vue partielle selon la flèche 4 de la figure 3 montrant la roue à rochet et à vis sans fin que comporte ledit rattrapeur d'usure ;
- la figure 5 est une vue en coupe axiale montrant les moyens de rampes dudit dispositif de rattrapage d'usure ;
- la figure 6 est une vue schématique de l'actionneur associé au dispositif d'embrayage des figures 3 à 5 ;
- la figure 7 est une vue analogue à la figure 6 pour un autre exemple de réalisation.

Dans les figures les éléments communs à l'invention et à l'art antérieur seront, par simplicité, affectés des mêmes signes de référence.

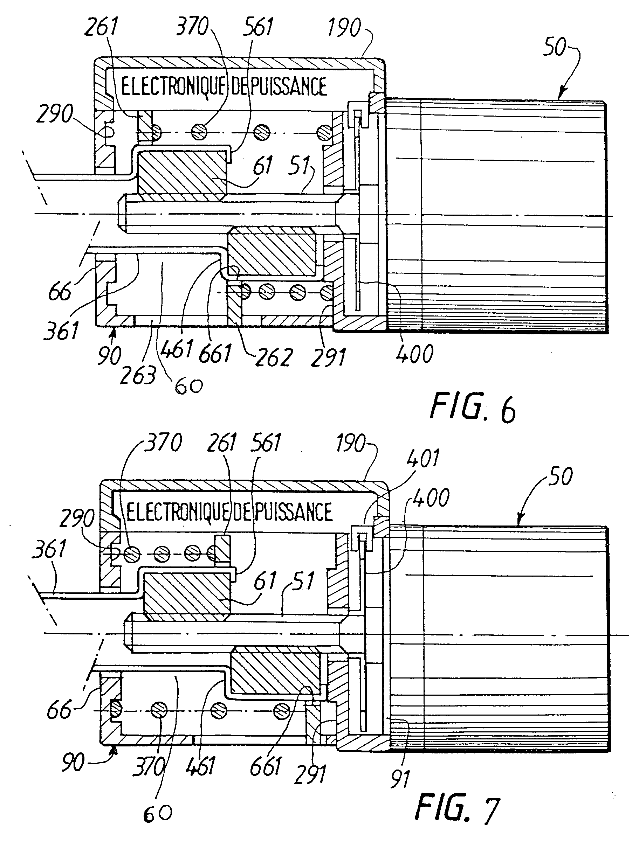

De même les éléments communs aux figures 6 et 7 seront affectés des mêmes signes de référence.

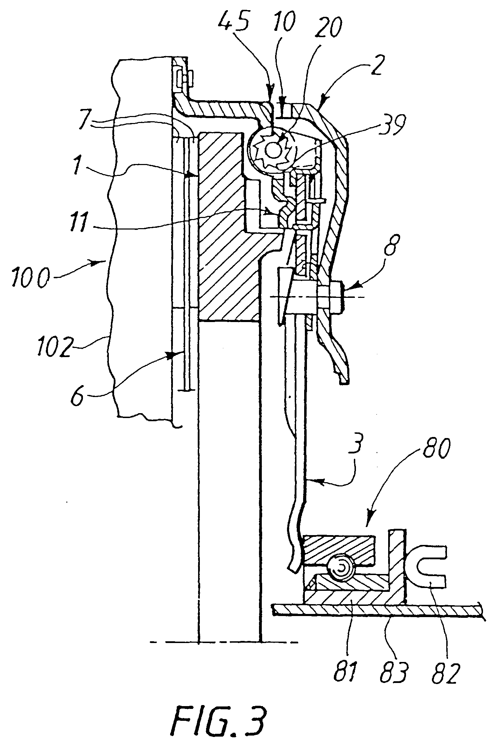

Ainsi dans les figures 3 à 7, suivant l'invention, l'embrayage à friction comporte un dispositif d'embrayage 100, des moyens de manoeuvre à moyens moteurs sous forme d'un moteur électrique 50 ici à courant continu, une transmission mécanique 60, des moyens élastiques d'assistance 70 et une timonerie 80.

Le dispositif d'embrayage 100 comporte en son sein, suivant une caractéristique de l'invention, un dispositif de rattrapage d'usure 10.

Plus précisément le dispositif d'embrayage 100 comporte un volant d'entraînement en rotation 102, un disque de friction 6 portant à sa périphérie externe des garnitures de friction 7, un plateau de pression 1, un couvercle 2 fixé sur le plateau de réaction 102, un diaphragme 3 agissant entre, d'une part, le couvercle 2 et, d'autre part, le plateau de pression 1, ici par l'intermédiaire de moyens d'appui 14, un dispositif de rattrapage d'usure 10 comprenant des moyens à rampes 11 portés par le plateau de pression.

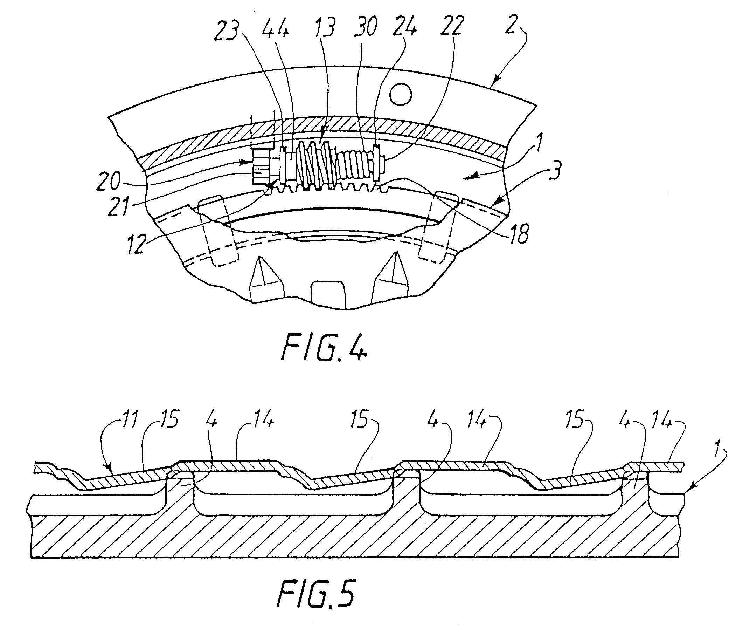

Le volant d'entraînement 102, éventuellement divisé, forme ici un plateau de réaction offrant dorsalement une face de friction à la garniture de friction 7 concernée. Ce volant est solidaire en rotation d'un premier arbre, tel qu'un arbre menant. Le plateau de pression 1 présente frontalement une face de friction pour l'autre garniture de friction 7. Dorsalement il présente ici des plots 4 (figure 4) destinés à coopérer avec des rampes 15 appartenant aux moyens à rampes 11 constitués ici d'un anneau présentant des rampes 15 inclinées et réparties circonférentiellement.

L'anneau 11 est ici métallique et comporte des zones d'appui 14 constituant les moyens d'appui pour le diaphragme 3, ici pour la rondelle Belleville de celui-ci. Il comporte également à sa périphérie externe une denture 18.

Le plateau de pression 1 est solidaire en rotation du couvercle 2, ici de forme creuse avec un fond troué centralement, et ce avec mobilité axiale par l'intermédiaire de languettes élastiques (non visibles) exerçant une fonction de rappel du plateau de pression 1 vers le fond du couvercle 2 portant des colonnettes 8 à tête profilée pour montage pivotant du diaphragme 3 - plus précisément de la périphérie interne de la rondelle Belleville du diaphragme 3 - sur le couvercle 2 présentant en regard des colonnettes 8 un autre appui formé par exemple par emboutissage de son fond.

Le disque de friction 6 présente à sa périphérie interne, de manière connue, un moyeu cannelé intérieurement pour sa liaison en rotation à un second arbre, tel qu'un arbre mené comme visible à la figure 1.

S'agissant d'une application à un véhicule automobile, le premier arbre est ici le vilebrequin du moteur sur lequel se fixe le volant 102 portant le plateau de pression 1, le couvercle 2 et par pincement le disque de friction 6 dont le moyeu central est ici lié en rotation à l'arbre d'entrée de la boîte de vitesses constituant le second arbre et ce de manière débrayable, les garnitures de friction 7 étant normalement serrées entre le plateau 1 et le volant 102. Le couple est ainsi transmis du vilebrequin à l'arbre d'entrée de la boîte de vitesses.

L' embrayage est donc normalement engagé (embrayé). Pour désengager l'embrayage il faut, à l'aide de la timonerie 80 précitée, agir sur l'extrémité interne des doigts du diaphragme 3 pour faire ici pivoter celui-ci autour des colonnettes 8 afin d'annuler progressivement la charge qu'exerce celui-ci sur le plateau de pression 1, plus précisément sur les moyens d'appui 14 (les zones d'appui 14 de l'anneau 11). Les languettes élastiques précitées, usuellement d'orientation tangentielle, rappellent alors le plateau de pression 1 en direction du fond du couvercle 2 pour libérer les garnitures de friction 7. L'embrayage est alors désengagé (débrayé). En relâchant l'action qu'exerce la timonerie 80 sur le diaphragme 3, l'embrayage passe alors de sa position désengagée à sa position engagée, dans laquelle le diaphragme est en contact avec l'appui porté par le fond du couvercle 2. La timonerie 80 agit donc de manière antagoniste sur le diaphragme 3 en étant commandé par un actionneur électromécanique décrit ci-après.

Lors de la durée de vie de l'embrayage, les garnitures de friction 7 s'usent ainsi que, dans une moindre mesure, les faces de friction du plateau de pression 1 et du volant 102.

Le plateau de pression 1 se rapproche donc du volant 102. Ainsi qu'on le sait, le diaphragme 3 à l'état libre a une forme tronconique.

Une fois monté dans le dispositif d'embrayage, sa conicité varie.

D'une manière générale la courbe caractéristique du diaphragme est fonction de ses dimensions, de son épaisseur et de la hauteur du tronc de cône de sa partie rondelle Belleville. Sa courbe caractéristique (charge exercée - déflexion) a une allure croissante jusqu 'à un maximum, puis une allure décroissante jusqu'à un minimum pour ensuite croître. En position embrayage engagé, garnitures de friction 7 neuves, le diaphragme occupe une position correspondant à un point de la partie décroissante de sa courbe caractéristique. En fonction de l'usure des garnitures de friction il se rapproche du maximum de sa courbe, puis dépasse ce maximum, sa charge exercée décroissant alors jusqu'à ce qu'il ne puisse plus transmettre le couple du moteur. En fonction des usures précitées son inclinaison varie. Le rôle du dispositif de rattrapage d'usure 10 est de maintenir le diaphragme 3 toujours dans la même position lorsque l'embrayage est engagé et donc de compenser au moins l'usure des garnitures de friction. Pour plus de précisions sur l'allure de la courbe caractéristique du diaphragme on se reportera à la figure 2 (courbe A) qui correspond globalement au bras de levier prêt à la charge qu'exerce la timonerie 80 pour désengager l'embrayage.

Cette timonerie comporte une butée de débrayage 81 (figure 3) propre à agir sur l'extrémité interne des doigts du diaphragme. Cette butée 81 dans cette figure est montée coulissante le long du tube-guide 83 solidaire de la boite de vitesses. Le tube-guide 83 est traversé intérieurement par l'arbre d'entrée de la boîte de vitesses visible en 101 à la figure 1.

La butée 81 est ici soumise à l'action d'une fourchette de débrayage 82 (dont on voit ici l'un des deux doigts) montée pivotante sur une partie fixe du véhicule, à savoir ici le carter de la boîte de vitesses.

Le montage pivotant est réalisé par exemple à l'aide d'une rotule ou d'un arbre. L'extrémité libre de la fourchette est soumise à l'action d'un actionneur₁ ici du type électromécanique, comportant les moyens de manoeuvre à moteur électrique 50, les moyens élastiques d'assistance 70 et la transmission mécanique 60 agissant sur la timonerie 80.

Suivant la localisation de l'actionneur par rapport à l'extrémité libre de la fourchette, celui-ci agit en poussant ou en tirant sur celle-ci et ce en fonction du type de l'embrayage.

En effet, d'une manière générale, l'embrayage au lieu d'être du type poussé comme celui de la figure 1 - la butée de débrayage 81 agissant en poussant sur le diaphragme pour désengager l'embrayage - ledit embrayage peut être du type tiré - la butée de débrayage agissant alors en tirant sur l'extrémité interne des doigts du diaphragme 3 pour désengager l'embrayage. Dans ce cas, la partie périphérique externe de la rondelle Belleville du diaphragme 3 prend appui sur le couvercle, tandis que la périphérie interne de ladite rondelle Belleville prend alors appui sur les moyens d'appui (les zones 14) portés par le plateau de pression.

De manière classique, tel que visible à la figure 3, la butée de débrayage comporte un roulement à billes avec, d'une part, une bague tournante en contact directement avec le diaphragme dans le cas d'un embrayage du type poussé ou en contact indirect avec le diaphragme par l'intermédiaire d'une pièce d'accostage située derrière le diaphragme dans le cas d'un embrayage du type tiré et, d'autre part, une bague non tournante attelée, par exemple par un ressort d'autocentrage ou un capot, à un manchon de manoeuvre soumis à l'action d'un organe de commande, tel que la fourchette de débrayage 82, agissant en poussant ou en tirant, selon les cas, sur ledit manchon. Un ressort de précharge agit usuellement sur la timonerie 80 pour maintenir en appui constant la butée de débrayage sur le diaphragme.

Le dispositif de rattrapage d'usure 10 comporte des moyens de détection de l'usure des garnitures de friction 7 (et dans une moindre mesure de l'usure du plateau 1 et du volant 102) associés à des moyens d'entraînement pour faire tourner les moyens d'appui, usuellement lorsque l'embrayage est en position désengagée.

Les moyens de détection peuvent comporter une goupille portée à frottement, par exemple par le plateau de pression, pour coopérer avec le volant ou le couvercle. Cette goupille est associée à des moyens élastiques, par exemple des ressorts à boudin, permettant d'entraîner en rotation les moyens d'appui 14 en cas d'usure, et ce lorsque l'embrayage est désengagé. Diverses configurations sont envisageables.

A la figure 3 les moyens de détection comportent une lame 45 portée par le couvercle 2 coopérant avec les dents 21 inclinées d'une roue à rochet 20 solidaire d'un axe 22, qui porte également à coulissement une vis sans fin 13. Le filet et le pas de vis sans fin sont adaptés à la denture 18 portée par l'anneau 11 et forment un système irréversible, la vis 13 pouvant déplacer la denture 18, mais pas l'inverse.

L'axe 22 est porté par un support 12 et comporte pour ce faire des ailes 23 et 24 (figure 4).

Ce support 12 porte également un ressort hélicoidal de rattrapage entourant l'axe 22 portant une collerette 44. Ce support 12 est porté par le diaphragme 3 et comporte un cliquet anti-retour 39 adapté à coopérer avec les dents 21 de la roue à rochet 20.

En cas d'usure la roue à rochet 20 se rapproche de la lame 45 adaptée à faire tourner la roue à rochet et à armer le ressort 30 suite à une certaine usure, la lame 45 sautant alors une dent. L'armement du ressort se fait lorsque l'embrayage est engagé. En position embrayage désengagé, le ressort 30 est alors amené à faire tourner la vis sans fin 13 entraînant alors en rotation les dents 18 et l'anneau 11, qui par coopération des rampes 15 avec les plots 4 - pouvant être remplacés en variante par des rampes complémentaires aux rampes 15 - du plateau de pression 1 se déplace axialement en sorte que les zones d'appui 14 se rapprochent par rapport au fond du couvercle 2 pour maintenir le diaphragme 3 en position sensiblement constante lorsque l'embrayage est engagé.

On augmente donc l'épaisseur entre les zones d'appui 14 et la face de friction du plateau de pression 1 en contact avec les garnitures de friction 7 du disque de friction 6.

Ainsi le dispositif de rattrapage d'usure 10 comporte une vis sans fin 13 montée à coulissement selon son axe 22 en étant soumise à l'action d'un moyen élastique de rattrapage (le ressort 30). C'est lorsque la vis 13 est déplacée selon son axe qu'elle entraîne en rotation circonférentielle les moyens à rampes (l'anneau 11), la charge du ressort 30 croissant avec l'usure des garnitures de friction 7, le déplacement axial étant obtenu par action du ressort 30 lorsque sa charge est suffisamment élevée pour surmonter l'effort de rappel dû aux languettes élastiques de liaison en rotation du plateau de pression 1 avec le couvercle 2 agissant sur l'anneau 11, l'embrayage étant désengagé. La roue à rochet 20 et la lame 45 constituent des moyens d'entraînement en rotation rendus opérationnels par l'usure des garnitures de friction 7 lorsque l'embrayage est embrayé. Le cliquet anti-retour 39 empêche la vis sans fin de tourner dans le sens contraire de celui dans lequel elle est entraînée en rotation par les moyens d'entraînement en rotation 20,45 lorsqu'ils sont rendus opérationnels.

Pour plus de précisions on se reportera au document FR-A-2 739 158.

Ainsi qu'on l'aura compris l'implantation du dispositif de rattrapage d'usure 10 au sein du dispositif d'embrayage permet de simplifier la timonerie 80 et l'actionneur électromécanique 50,60,70. Cela permet également d'augmenter la durée de vie de l'embrayage.

Le moteur électrique 50 entraîne ainsi la transmission mécanique 60 selon une course indépendante de l'usure des garnitures de friction 7 et/ou du plateau 1 et du volant 2.

Cette course est toujours la même. Les moyens élastiques d'assistance 70 permettent au moteur électrique 50, de manière connue, de ne développer qu'un faible effort. Ces moyens élastiques 70, à la manière d'un ascenseur, emmagasinent l'énergie du diaphragme 3 pendant le passage de celui-ci de sa position embrayage désengagé à sa position embrayage engagé (c'est-à-dire pendant l'engagement de l'embrayage) et la restitue au moment du débrayage (passage de la position embrayage engagé à la position embrayage désengagé).

Les moyens élastiques d'assistance agissent donc de manière antagoniste par rapport au diaphragme 3.

En position embrayage engagé les moyens élastiques 70 n'exercent pas de force ou une faible force sur la timonerie 80 et donc sur le diaphragme. Ceci est possible durant toute la durée de vie de l'embrayage car le diaphragme, grâce au dispositif de rattrapage d'usure 10, occupe toujours la même position. Ainsi qu'on le sait les bornes d'alimentation du moteur électrique 50 sont reliées à un module électronique situé à l'extérieur de l'actionneur 50,60,70.

Ce module comporte par exemple un microcalculateur, tel qu'un microprocesseur, des circuits de traitement des informations et, par exemple, des transistors de puissance montés en série pour commander le moteur dans les deux sens de rotation. Le module électronique appartient à un circuit électronique comportant un certain nombre de capteurs envoyant des informations au module électronique.

Ces capteurs captent notamment la vitesse des arbres menant (le vilebrequin) et mené (l'arbre d'entrée de la boîte de vitesses), la course de l'actionneur, l'état de la boîte de vitesses (rapport engagé) et l'état du levier de changement de vitesses (capteur d'effort).

A partir de tout ceci il est élaboré une stratégie pour les opérations d'embrayage et de débrayage. Le moteur 50 rotatif n'est donc sous tension que pendant des instants très courts (opération de débrayage) et consomme donc très peu d'énergie fournie ici par la batterie du véhicule. Sa puissance est très faible grâce aux moyens élastiques d'assistance 70. Tout ceci permet d'avoir un actionneur électromécanique 50,60,70 léger.

Dans le but de réduire encore les coûts de l'actionneur, l'invention propose que les moyens élastiques d'assistance 70 prennent appui sur une partie fixe et sur une partie mobile formant écrou de manière décrite ci-après.

Ici l'actionneur (figure 6) comporte un flasque 91 sur lequel se fixe le moteur électrique 50, par exemple à l'aide de vis.

Ce flasque porte à sa périphérie interne un roulement à billes non visible portant l'arbre de sortie 51 du moteur électrique. Ce flasque 91 est donc troué centralement pour passage de l'arbre 51 et est conformé pour former un support de roulement.

L'arbre de sortie 51 du moteur électrique 50 est ainsi, de manière connue, fixe en translation et mobile en rotation lorsque le moteur est alimenté électriquement.

Le flasque 91 est solidaire d'un boîtier 90. Plus précisément le flasque 91 constitue un couvercle pour le boîtier 90 de forme creuse et est fixé sur l'extrémité avant ouverte du boîtier 90, donc le fond 66 est troué centralement.

L'ensemble boîtier 90 - flasque 91 forme un carter fixe et est fixé sur une partie fixe du véhicule, par exemple le carter de la boîte de vitesses. Le boîtier 90 ou le flasque 91 présente pour ce faire des oreilles non visibles.

L'arbre 51 a une extrémité filetée et constitue l'élément d'entrée de la transmission mécanique 60. L'arbre 51, selon une caractéristique de l'invention, vient en prise avec un écrou 61 de forme tubulaire. Cet écrou 61 porte un appui mobile annulaire 261. Le boîtier 90 porte un fond d'orientation transversale 66 et présente une jupe annulaire 67 d'orientation axiale prolongeant le fond 66.

Suivant une caractéristique l'écrou 60 est fixe en rotation et mobile axialement.

Plus précisément lors de l'opération de débrayage les moyens élastiques d'assistance se détendent pour contrebalancer l'action qu'exerce le diaphragme sur la butée de débrayage 81.

Le moteur électrique entraînant l'arbre 51, fixe en translation, l'écrou 61, fixe en rotation et entraîné par l'arbre 51 formant vis, se déplace en translation axialement en direction du fond 66 du boîtier 90.

Lors de l'opération d'embrayage, sous l'action du diaphragme 3, les moyens élastiques d'assistance reviennent à leur position initiale plane.

Suivant une caractéristique, des moyens de liaison en rotation existent entre le boîtier 90 et l'écrou 61 formant l'élément de sortie de la transmission mécanique. L'écrou effectue ainsi un mouvement de translation en étant lié en rotation au boîtier.

Les moyens de liaison en rotation peuvent consister en une clavette portée par l'écrou 61 s'engageant dans une rainure d'un manchon de guidage de l'écrou 61, ledit manchon (non représenté) étant porté en saillie axiale vers l'extérieur par le fond du boîtier.

Bien entendu on peut inverser les structures, l'écrou 61 présentant une rainure et le manchon une clavette ou d'une manière générale un tenon.

On peut envisager une liaison en rotation, avec liberté de déplacement axial, à l'aide de languettes élastiques fixées à l'une de leur extrémité au fond du boîtier et à leur autre extrémité à l'écrou 61.

Les moyens élastiques d'assistance 70 prennent donc appui sur une partie fixe et sur une partie mobile pour agir sur l'élément de sortie 61 de la transmission 60.

La transmission mécanique 60 est extrêmement simplifiée et comporte un nombre minimum de pièces. Elle est de forme simple et économique. A la figure 6 l'actionneur agit en poussant à l'aide de son élément de sortie (l'écrou 61) sur la timonerie.

Cet écrou 61 peut présenter par exemple à son extrémité arrière une partie filetée pour montage à vissage d'une rotule agissant sur l'extrémité libre de la fourchette de débrayage. En variante on peut prévoir un système de biellettes.

Bien entendu on peut inverser les structures pour que l'écrou agisse en tirant sur la timonerie comme visible à la figure 7.

Ainsi grâce à l'invention on peut inverser aisément les structures.

Bien entendu la timonerie peut comporter une commande hydraulique à savoir un émetteur dont le corps est rapporté sur le fond 66 du boîtier 90.

L'élément de sortie (l'écrou) est alors conformé en poussoir pour agir sur le piston de l'émetteur soumis, de manière connue, à l'action d'un ressort de rappel avec éventuellement intervention d'une électrovalve.

Une butée élastique, par exemple en élastomère, peut être prévue pour limiter les bruits. Cette butée agit en fin de course entre la partie fixe et mobile.

Ainsi qu'on le sait, en déplaçant le piston de l'émetteur à l'aide de l'écrou, on pressurise la chambre de commande de l'émetteur avec transfert de liquide via le conduit de l'émetteur au récepteur dont le piston agit sur la butée de débrayage en étant montée coulissante le long d'une partie tubulaire traversée par l'arbre d'entrée de la boîte de vitesses.

Bien entendu l'écrou de la transmission mécanique selon l'invention peut agir en tirant sur un câble relié à la fourchette de débrayage à l'aide, par exemple, d'une olive montée sur l'extrémité libre de la fourchette.

Bien entendu le moteur électrique peut être monté sur une pièce, à savoir un flasque fixé sur le couvercle de l'embrayage, comme décrit dans le document FR-A-2 580 753 précité. Dans ce cas l'arbre mené ne traverse pas l'actionneur, le bout de l'arbre mené venant en prise avec le moyeu du disque de friction.

A la lumière de ce document, on voit que l'actionneur peut former une cartouche rapportée sur le couvercle de l'embrayage.

Bien entendu le système vis-écrou peut être du type à recirculation de billes ou de rouleaux comme décrit dans le document précité.

L'écrou 61 agit de manière directe ou indirecte sur la timonerie 60.

Dans les figures 6 et 7 les moyens élastiques d'assistance consistent en un simple ressort à boudin 370 et on ne reproduit pas totalement en valeur absolue, compte tenu des bras de levier, la courbe caractéristique du diaphragme.

Dans la figure 6 l'actionneur est du type poussé, la butée de débrayage agissant en poussée sur les doigts du diaphragme 3, tandis qu'à la figure 7 l'actionneur est du type tiré, la butée de débrayage agissant en tirant les doigts du diaphragme 3.

Dans la partie haute de la figure 6 l'embrayage est en position embrayée ou engagée, tandis que dans la partie basse de cette figure 9 l'embrayage est en position débrayée ou désengagée.

Dans la figure 7 c'est l'inverse, l'embrayage étant en position débrayée dans la partie haute de la figure 10 et en position débrayée dans la partie basse de cette figure.

Dans ces figures l'arbre de sortie 51 du moteur électrique 50 porte à solidarisation une roue phonique 400 associée à un capteur à effet Hall 401. Ainsi qu'on le sait en présence d'un aimant les électrons sont déviés. Le capteur à effet Hall repose sur ce principe. La roue phonique est trouée à sa périphérie externe.

Lorsque l'arbre 51 tourne il entraîne en rotation la roue 400, solidaire dudit arbre, en sorte que le champ magnétique varie, le capteur 401 ayant ici globalement une section en forme de U.

La rotation de la roue donne ainsi une information précise sur le déplacement de l'écrou 61 apte à être entraînée par la vis constituée par l'extrémité de l'arbre 51 fixe en translation de manière précitée. L'écrou 61 est fixe en rotation de manière précitée et est mobile en translation lorsqu'il est entraîné par l'arbre 51 c'est-à-dire lorsque le moteur électrique 50 est alimenté et donc tourne.

L'écrou 61 présente à sa périphérie externe, en saillie radiale vers l'extérieur, une collerette 261. Cette collerette 261 forme un appui pour une extrémité axiale du ressort à boudin d'assistance 370 qui entoure ainsi l'écrou 61.

Ici la collerette 261 porte à sa périphérie externe, en saillie radiale vers l'extérieur, des pattes 262, formant tenons, engagées chacune dans une rainure 263, formant mortaises, pratiquée dans la jupe 67 du boîtier 90.

L'écrou 61 est ainsi fixe en rotation tout en étant apte à se déplacer axialement grâce à une liaison du type tenons-mortaises.

Avantageusement on prévoit deux pattes 262 et deux rainures 263 diamétralement opposées.

En variante on prévoit un nombre de rainures 263 et de pattes 262 régulièrement réparties.

Les pattes 262 et/ou les bords des rainures 263 peuvent être revêtues d'une couche de matière à faible coefficient de frottement pour favoriser le coulissement.

Grâce à ces dispositions il n'y a pas d'effort parasitaire sur la vis.

L'autre extrémité du ressort d'assistance 370 s'appuie directement sur le fond 66 du boîtier 90 (figure 7) ou sur l'un flasque fixe 291 (figure 6). Ce flasque fixe 291 est traversé par l'arbre 51 en étant solidaire du moteur électrique.

Le flasque 291 masque la roue phonique 400 interposée axialement entre ledit flasque et le flasque avant 91 du carter du moteur électrique 50. C'est sur ce flasque 91 que se fixe en partie le boîtier 90. Le boîtier 90 comporte une partie sommitale 190 portant l'électronique de puissance de commande du moteur électrique 50. Cette partie 190 est donc rapportée sur la partie principale du boîtier 90 et s'étend radialement au-delà du ressort d'assistance 370.

Un tube 361 est solidaire de l'écrou 61. Ce tube est étagé en diamètre pour formation d'un épaulement 461 au niveau du changement de diamètre du tube 361. L'écrou 61 est logé dans la partie de plus grand diamètre du tube 361. L'écrou 61 est immobilisé axialement en étant emprisonné entre l'épaulement 461 et l'extrémité de pattes 561 rabattues radialement vers l'intérieur.

Ces pattes 561 traversent chacune un trou 561 réalisé à la base 161 de la collerette 261.

A la figure 6 la portion de plus grand diamètre du tube 361 est donc fractionnée en pattes axiales 561 dont l'extrémité libre est rabattue radialement vers l'intérieur.

A la figure 7 la portion de plus grand diamètre du tube 361 peut être continue et présenter à son extrémité libre les pattes 561.

En effet à la figure 6 le ressort d'assistance 370 s'appuie sur le flasque 291 épaulé à cet effet pour centrer le ressort 370 et sur la collerette 261 proche du fond 66 du boîtier 90 lorsque l'embrayage est en position embrayée.

A la figure 7 en position embrayage embrayé, le ressort 370 s'appuie sur le fond 66 du boîtier 90 et sur la collerette 261 proche du flasque 291 dans ce cas.

A la figure 6 la collerette 261 est donc plus éloignée du moteur électrique 50 qu'à la figure 7. Dans tous les cas la portion de plus grand diamètre du tube 361 est en contact interne avec la périphérie externe de l'écrou 61.

On appréciera que l'actionneur des figures 6 et 7 est particulièrement simple et qu'il peut être standardisé. C'est la raison pour laquelle le fond 66 du boîtier 90 présente une empreinte 290 pour l'appui éventuel du ressort d'assistance 370. Le ressort unique d'assistance 370 est peu encombrant radialement, ce qui permet de loger l'électronique de puissance radialement au-delà du ressort 370.

L'écrou 61 a une forme simple grâce au tube 361. C'est à travers ce tube 361 que sont transmis les efforts.

La roue phonique 400 et le flasque 291 sont des éléments standards.

Bien entendu le dispositif de rattrapage d'usure 10 peut être commandé par 1e diaphragme comme décrit dans le document FR 96 11297 déposé le 17 septembre 1996 et publié sous le numéro FR-A-2 753 503.

Tout autre type de rattrapage d'usure est envisageable.

De même alors qu'à la figure 3 les moyens débrayeurs sont constitués par les doigts du diaphragme, tout autre forme de réalisation est envisageable.

Par exemple les moyens débrayeurs peuvent consister en un faux diaphragme comme décrit dans le document DE-B-1 198 214, les moyens embrayeurs consistant en une rondelle Belleville distincte du faux diaphragme. Ce faux diaphragme peut être du type de celui décrit dans le document FR-A-2 753 756 déposé le 6 septembre 1996.

En variante on peut utiliser des dispositions avec une rondelle élastique positive et une rondelle Belleville négative montées en séries comme dans le document FR-A-2 753 756 avec intervention d'un dispositif de rattrapage d'usure et faible effort de manoeuvre.

Dans ce cas les moyens embrayeurs comportent deux rondelles Belleville en série du type négative et positive.

On appréciera que l'électronique de puissance pour commander le moteur électrique 50 est intégrée au boîtier 90. Cette électronique comporte des composants électroniques notamment des transistors de puissance ainsi que le capteur incrémental de mesure de déplacement de l'écrou 61 ici du type à effet Hall. En variante le capteur peut consister en un capteur optique ou autre. Le capteur incrémental peut avoir une autre forme et comporter des dents entraînées par l'arbre 61 et défilant devant un organe de lecture produisant un signal de lecture représentatif de la position et/ou de la vitesse de l'écrou. Le dispositif de connexion peut être intégré au boîtier 90. C'est sur ce dispositif que se branche un connecteur d'alimentation et un connecteur de commande relié au module électronique de commande.

De manière précitée, une butée en matière élastique, telle que de l'élastomère, peut intervenir entre le flasque 291 et par exemple l'extrémité du tube 361 pour limiter les bruits. Cette butée est portée par l'un des éléments flasque 291 - partie mobile.

Le boîtier peut entourer le moteur électrique fixé alors à l'avant sur le flasque d'extrémité formant couvercle du boîtier. Dans ce cas le moteur électrique est entouré par le ressort d'assistance 370, qui prend appui sur le flasque d'extrémité du boîtier 90.

Dans ce cas le moteur électrique rentre à l'intérieur du boîtier et on réduit la longueur axiale de l'actionneur puisque le ressort d'assistance entoure le moteur électrique. Le carter de forme annulaire du moteur électrique peut présenter une collerette à son extrémité avant. C'est sur cette collerette que s'appuie alors le ressort d'assistance. Le ressort d'assistance peut alors sortir du boîtier pour s'appuyer sur la collerette, le boîtier portant un cache pour le ressort.

Ce moteur électrique peut être dépourvu de balais.

D'une manière générale l'actionneur comporte des moyens moteurs de tout type par exemple hydraulique, ou d'une manière générale toute machine tournante, par exemple un moteur électrique à courant continu ou un moteur électrique sans balai.

## Revendications

1. Embrayage à friction, notamment pour véhicules automobiles, comportant d'une part un dispositif d'embrayage comprenant des moyens embrayeurs et débrayeurs (3), tels qu'un diaphragme (3) prenant appui sur un couvercle (2), solidaire d'un volant d'entraînement (102) en rotation, pour action sur un plateau de pression (1) et serrage des garnitures de friction (7) d'un disque de friction (6) entre le plateau de pression (1) et le volant d'entraînement (102) et, d'autre part, une timonerie (80) pour agir de manière antagoniste sur l'extrémité interne des moyens débrayeurs (3), un actionneur (50,60,70,90,91) pour commander ladite timonerie, et un dispositif de réglage (10), dit rattrapeur d'usure, pour compenser l'usure des garnitures de friction (7), dans lequel l'actionneur comporte des moyens de manoeuvre à moyens moteurs (50), une transmission mécanique (60) avec un élément d'entrée (51) formé par l'arbre de sortie des moyens moteurs (50), un élément de sortie (61) pour agir sur la timonerie (80), des moyens élastiques d'assistance (70) agissant entre une partie fixe (91) et un élément (61,161) de la transmission pour agir de manière antagoniste par rapport aux moyens embrayeurs afin que les moyens moteurs (50) ne fournissent qu'un faible effort pour désengager l'embrayage, caractérisé en ce que les moyens élastiques d'assistance (70,370) consistent en un ressort à boudin (370) prenant appui sur une partie fixe (91,66,291) et sur une partie mobile (61) en translation et fixe en rotation, comportant un écrou, pour coopérer avec l'arbre de sortie (51) du moteur électrique, formant vis, mobile en rotation et fixe en translation, en ce que le ressort à boudin d'assistance (70) entoure l'écrou (61), en ce que la partie mobile (61) forme l'élément de sortie de la transmission mécanique (60) en étant propre à agir sur la timonerie (60) et en ce que le dispositif de rattrapage d'usure (10) est monté au sein du dispositif de débrayage.

2. Embrayage selon la revendication 1, caractérisé en ce que les moyens élastiques d'assistance sont montés à l'intérieur d'un boîtier fixe (90) fermé par un couvercle (91) servant de support au moteur électrique (50).

3. Embrayage selon la revendication 2, caractérisé en ce que le boîtier est de forme creuse et présente un fond (66).

4. Embrayage selon la revendication 3, caractérisé en ce que les moyens de liaison en rotation avec mobilité axiale interviennent entre le boîtier et l'écrou (61).

5. Embrayage selon la revendication 4, caractérisé en ce que lesdits moyens de liaison en rotation consistent en des pattes (262) solidaires de la partie mobile (61) et engagées à coulissement axial dans des rainures axiales (263) réalisées dans une jupe (67) que présente le boîtier (90).

6. Embrayage selon l'une quelconque des revendications 2 à 5, caractérisé en ce que l'un des éléments couvercle (91) - fond (66) du boîtier (90) présente un appui fixe (290,291) pour les moyens élastiques d'assistance (70).

7. Embrayage selon la revendication 6, caractérisé en ce que l'écrou porte en saillie radiale un appui (261) mobile avec l'écrou (60) pour appui de l'autre extrémité du ressort à boudin d'assistance (370).

8. Embrayage selon l'une quelconque des revendications 1 à 7, caractérisé en ce que le ressort à boudin d'assistance (370) entoure les moyens moteurs pour réduction de l'encombrement axial.

9. Embrayage selon la revendication 8, caractérisé en ce que les moyens moteurs consistent en un moteur électrique (50).

10. Embrayage selon l'une quelconque des revendications 1 à 7, caractérisé en ce que l'arbre de sortie (51) porte une roue phonique (400) associée à un capteur à effet Hall (401) pour mesurer le déplacement de l'écrou.
